# EUROPÄISCHE PATENTSCHRIFT

(11) **EP 1 988 038 B1**
(45) Veröffentlichungstag und Bekanntmachung des Hinweises auf die Patenterteilung: **11.07.2018**
(21) Anmeldenummer: 08004331.8
(22) Anmeldetag: 08.03.2008
(51) Int. Cl.: B23P 19/00, B65G 37/02, B23P 21/00, B23Q 7/14, B65G 17/34

(54) **Verfahren zum Abgeben und Aufnehmen von Werkstücken auf eine Arbeitsebene**
Method for delivering and reciving workpieces onto a work surface
Procédé destiné à déposer et prendre des pièces sur une surface de travail

(30) Priorität: 04.05.2007 DE 102007021068
(43) Veröffentlichungstag der Anmeldung: 05.11.2008
(73) Patentinhaber: Beer, Christian, 6858 Schwarzach (AT)
(72) Erfinder: Beer, Christian, 6858 Schwarzach (AT)
(74) Vertreter: Riebling, Peter

(56) Entgegenhaltungen:
- EP-A1- 0 114 343
- EP-A1- 0 554 769
- EP-A1- 1 234 785
- EP-A1- 1 947 034
- CH-A- 534 624
- DE-A1- 3 619 148
- DE-A1- 4 014 699
- DE-A1- 19 842 752
- JP-A- 5 294 441
- JP-A- 60 172 451
- JP-A- 61 079 544
- JP-A- H02 186 411
- JP-A- S58 119 503
- JP-A- S59 124 603
- JP-A- S63 195 705
- JP-A- 2005 089 059
- US-A- 5 664 929

## Beschreibung

Die Erfindung betrifft ein Verfahren zum Abgeben und Aufnehmen von Werkstücken auf eine Arbeitsebene, an welcher unterschiedliche Abgabestationen und entfernt davon unterschiedliche Aufnahmestationen angeordnet sind. In der industriellen Fertigung und Bearbeitung von Werkstücken besteht immer das Problem, dass man Werkstücke an einen Bearbeitungsplatz bringen muss, dort müssen die Werkstücke der Bearbeitung zugeführt werden, und nach erfolgter Bearbeitung müssen die Werkstücke wieder von dem Arbeitsplatz entfernt werden.

Hierbei ist es bekannt, Längsförderer zu verwenden, wobei die zu bearbeitenden Werkstücke auf einem Längsförderer (z. B. einem Förderband oder einem Kettenförderer) an den Arbeitsplatz gebracht werden. An der Übergabestelle zur Arbeitsebene, die z. B. parallel zu dem Längsförderer angeordnet ist, ist bekannterweise eine Weiche angeordnet, welche ermöglicht, dass das auf dem Förderband befindliche Werkstück über das Weichensystem auf die Arbeitsebene verbracht wird. Eine solche Weiche besteht beispielsweise aus einer Hubeinheit, die von unten durch den Längsförderer hindurchfährt, das auf dem Längsförderer ruhende Werkstück anhebt, in Querrichtung zum Längsförderer auf eine Arbeitsebene fördert und auf der Arbeitsebene wieder absetzt.

Eine solche Hubeinheit ist beispielsweise mit der DE 36 19 148 offenbart und besteht aus einer Transportvorrichtung mit einer Hubplatte zum be- und entladen von Werkstückpaletten auf einen Längsförderer mit einem Transportwagen. Diese Transportvorrichtung ist im rechten Winkel zum Transportwagen verfahrbar wobei der Transportwagen mit einem Kettenantrieb angetrieben ist.

Die Arbeitsebene kann hierbei wiederum ein Längsförderer sein oder auch einen von einem menschlichen Werker betreuter Arbeitsplatz, der die Werkstücke in entsprechender Weise bearbeitet.

Nach erfolgter Bearbeitung der Werkstücke auf der Arbeitsebene müssen die Werkstücke wieder mit einem vorher beschriebenen Weichensystem von der Arbeitsebene über den Hubförderer auf den Längsförderer verbracht werden.

Dafür kann der Hubförderer auch direkt auf dem Längsförderer angeordnet sein. Eine solche Ausführung ist aus der EP 0554769 A1 zu entnehmen. Der kombinierte Hub- und Längsförderer ist hierbei als Transportroboter ausgebildet, welcher mit einer Hub- und Drehvorrichtung die Ware zu- und abfördert.

Ein solcher Transportroboter ist auch in der JP 61 079544 A offenbart, und ist mittels Signalsteuerung zwischen verschiedenen Arbeitsstationen verfahrbar. Die Werkstücke werden hierbei mi einem auf dem Transportroboter befindlichen, Gabelförmigen Hubförderer zu- und abgefördert.

Mit der Anordnung des genannten Systems ist ein immenser Maschinenaufwand verbunden, denn der Hubförderer bedarf entsprechender Sensoren, Stopper und entsprechender Steuerungen, die diesen Hubförderer in Abhängigkeit von dem ankommenden Werkstück, in Abhängigkeit von der gewünschten Taktzeit bei der Bearbeitung und in Abhängigkeit von anderen Parametern steuert.

Im Übrigen besteht bei den bekannten Weichensystemen, die mit Hubförderern arbeiten, der weitere Nachteil, dass der Hubförderer immer nur an einer bestimmten Stelle des Längsförderers angeordnet ist und nur auf eine bestimmte, genau festgelegte und nicht veränderbare Abgabestelle auf die Arbeitsebene fördert.

Die 40 14 699 A1 offenbart eine Einrichtung zum Transportieren von Werkstücken, welche ohne Hubförder die Werkstücke zu- und abführt. Dabei werden mittels Förderguten eines Doppelgurtförderers auf einen Transportwagen zu- und abgefördert. Die Fördergurten treten aus einer örtlichen Aussparung aus dem Transportwagen heraus und bilden so die Auflagefläche für die Werkstücke. Es handelt sich hierbei um ein einfaches Transportmittel, welches zwischen Abgabestellen verfahrbar ist. Die Abgabestelle auf der Arbeitsebene ist hierbei nicht veränderbar.

Aus diesem Grunde ist es erforderlich, dass auf der Arbeitsebene noch eine sogenannte Pufferstrecke eingerichtet wird, die dafür sorgt, dass der auf der Arbeitsebene arbeitenden Maschine oder dem menschlichen Werker immer genügend Teile zur Verfügung gestellt werden.

Auch die Anordnung einer solchen Pufferstrecke ist aufwändig, denn es bedarf entsprechender Stopper, Steuerungen und entsprechender Übergabeeinrichtungen, um die Pufferstrecke genau in Abhängigkeit von der Arbeitsgeschwindigkeit auf der Arbeitsebene zu steuern.

Es liegt auf der Hand, dass auch der Montage- und der Wartungsaufwand für das Weichensystem und die Pufferstrecke außerordentlich groß sind, denn zur Errichtung einer derartigen Fabrikationseinheit bedarf es vieler Arbeitsstunden.

Die JP S63 195705 A offenbart ein unbemanntes Fahrzeugsystem zur Durchführung von Arbeitsoperationen an einzelnen fest eingeteilten Arbeitsbereichen. Dazu empfängt das Fahrzeug, durch ein an den Arbeitsbereichen angeordnetes Signalmittel, einen Arbeitsauftrag zur Durchführung der Arbeitsoperation an diesem Arbeitsbereich. Die Verwendung eines Längsförderers lässt sich aus dieser Druckschrift nicht entnehmen. Zudem ist es nicht möglich, Paletten oder Kisten parallele zur Fahrbahn des Transportroboters zu verschieben.

Die JP 2005 089059 A zeigt die Verwendung eines Längsförderers der über eine Klemmvorrichtung einzelne Artikel aus einem Regal greift und auflädt. Ein bedarfsgesteuertes Anfahren von Arbeitsebenen mit einem aus zwei Riemen bestehenden Querförderers lässt sich aus dieser Druckschrift jedoch nicht entnehmen.

Der Erfindung liegt deshalb die Aufgabe zugrunde, ein Verfahren und eine Vorrichtung zum Abgeben und Aufnehmen von Werkstücken von einem Längsförderer in Richtung auf eine Arbeitsebene und von der Arbeitsebene auf den Längsförderer zurück so auszubilden, dass mit wesentlich geringerem Steuerungsaufwand und geringerem Maschinenaufwand eine betriebssicherere Förderung gegeben ist.

Zur Lösung der gestellten Aufgabe ist das Verfahren durch die technische Lehre des Anspruches 1 gekennzeichnet. Vorteilhafte Ausführungsbeispiele des Verfahrens sind in den Unteransprüchen 2 bis 6 angegeben. Wesentliches Merkmal der Erfindung ist, dass in an sich bekannter Weise an der Arbeitsebene eine Abgabestation und entfernt davon eine Aufnahmestation angeordnet sind und dass die Abgabestation und die Aufnahmestation Teil einer Schienenbahn sind, auf der autonom verfahrbare Transportroboter verfahrbar sind, wobei jeder Transportroboter mit einem Querförderer ausgerüstet ist, auf dem die Werkstücke z. B. auf einer Werkstückträgerplatte oder einer Transportkiste gelagert sind, und der Querförderer in der Lage ist, das Werkstück oder die Werkstückträgerplatte oder die Transportkiste von dem Transportroboter auf die Arbeitsebene zu fördern (Abgabestation) oder von der Arbeitsebene wieder aufzunehmen (Aufnahmestation).

Mit der gegebenen technischen Lehre ergibt sich also der wesentliche Vorteil, dass auf das vorher beschriebene, aufwändige Weichensystem verzichtet werden kann, denn nun sind auf dem Längsförderer eine Anzahl von autonom arbeitenden Transportrobotern angeordnet, die selbsttätig zu der Aufnahme- und der Abgabestation fahren.

Die Transportroboter erhalten ihre Fahrbefehle von einem Zentralrechner, der nur einmal einen solchen Fahrbefehl abgibt und aufgrund der autonomen Intelligenz des Transportroboters weiß dieser nun, an welcher Abgabestation er die Werkstücke abgeben muss und an welcher Aufnahmestation er die Werkstücke aufnehmen soll.

Der einfacheren Beschreibung wird in der folgenden Beschreibung davon ausgegangen, dass die zu bearbeitenden Werkstücke auf Werkstückträgerplatten oder in Transportkisten angeordnet sind.

Hierauf ist die Erfindung nicht beschränkt. Die zu bearbeitenden Werkstücke können in irgendwelchen Behältnissen, Halterungen oder dergleichen auf dem Transportroboter angeordnet sein, wobei wichtig ist, dass die Werkstücke (bzw. die den Werkstücken zugeordneten Werkstückträgerplatten oder Transportkisten) stets auf dem Querförderer angeordnet sind, der mit dem Transportroboter in funktionaler Einheit verbunden ist.

Zur Ausführung des Verfahrens ist es also notwendig, die zu befördernden Werkstücke auf einem Querförderer anzuordnen, der auf dem Transportroboter angeordnet ist und von diesem gesteuert wird.

In der folgenden Beschreibung wird also davon ausgegangen, dass die Werkstücke nicht direkt auf dem Querförderer angeordnet sind, sondern entweder auf Werkstückträgerplatten oder in Transportkisten ruhen.

Mit der gegebenen technischen Lehre ergibt sich der wesentliche Vorteil, dass es nun erstmals möglich ist, flexible Abgabe- und Aufnahmestationen zu definieren. Es handelt sich demzufolge um ein "Weichensystem", welches aus einem Transportroboter mit einem darauf angeordneten Querförderer gebildet ist und damit bedarf es keine weiteren Einrichtung mehr wie eines maschinell aufwändigen eigenen Weichensystems und einem Hubförderer oder einer Pufferstrecker oder dergleichen.

Wichtig ist nämlich, dass der Transportroboter auftragsbezogen verschiedene nebeneinander liegende Abgabestationen an der Arbeitsebene anfahren kann und hierdurch die Pufferstrecke eingespart wird.

Ist die Arbeitsmaschine oder der Werker auf der Arbeitsebene so schnell, dass sich Lücken in der Zuführung der zu bearbeitenden Werkstücke ergeben, erkennt der Transportroboter diese Lücke auf der Abgabestation und fördert die Werkstückträgerplatte mit den darauf zu bearbeitenden Werkstücken genau in ihre leere Stelle auf der Arbeitsebene.

Findet er an einer anderen Stelle der Arbeitsebene ein leere Fläche, dann wird er diese leere Fläche anfahren (flexible Abgabestation) und auf diese Fläche die Werkstückträgerplatte abgeben.

Auf diese Weise wird die Pufferstrecke eingespart, denn der Transportroboter kann selbsttätig auf der Arbeitsebene erkennen, wo sich eine Lücke ergibt und kann dann die entsprechende Werkstückträgerplatte dort ablegen.

Gleiches gilt in analoger Weise auch für die Aufnahmestation, denn es könnte bei der Aufnahmestation ebenfalls möglich sein, dass Lücken bei den hintereinander liegenden bearbeiteten Werkstückträgerplatten vorhanden sind und der Transportroboter erkennt Lücken im Bereich der Aufnahmestation und wird statt der einen Aufnahmestation diejenige anfahren, die eine fertig bearbeitete Werkstückträgerplatte aufweist und diese dann mit seinem Querförderer von der Arbeitsebene abholen.

Demzufolge wird auch eine Pufferstrecke im Bereich der Abgabefläche der Arbeitsebene eingespart.

Hieraus ergibt sich im Übrigen auch, dass es keinen Steuerungsaufwand mehr für die Steuerung einer Weiche mit einem Hubstapler oder Hubförderer und auch keinen Steuerungsaufwand für eine Pufferstrecke gibt.

Durch die flexible Anordnung von Abgabe- und Aufnahmestationen entlang der Arbeitsebene entfällt die Pufferstrecke. Demzufolge ist keine Verkabelung oder Verdrahtung einer ansonsten vorhandenen Pufferstrecke notwendig.

Mit der gegebenen technischen Lehre ergibt sich der weitere Vorteil, dass die hier zu bearbeitenden Werkstücke bestückten Werkstückträgerplatten nun in ein starr verkettetes System auf der Arbeitsebene eingeschleust werden können.

Die Arbeitsebene kann hierbei aus verschiedenen Bearbeitungsmaschinen bestehen, in einem strengen Takt arbeiten, und es ist durch die flexible Ausbildung der Abgabe und Aufnahmestation nun möglich, bedarfsgesteuert in diesen starren Takt die zu bearbeitenden Werkstückträgerplatten einzuschleusen. Dies war mit den vorherigen Weichensystemen nicht möglich, weil die vorherigen Weichensysteme nicht längs des Längsförderers verschiebbar waren, sondern immer stets an der gleichen Stelle auf die Arbeitsebene förderten, was bei der Erfindung vermieden wird.

In der Vorrichtung zur Verwirklichung des Verfahrens ist vorgesehen, dass der Querförderer auf den Transportroboter als Riemenband ausgebildet ist, wobei zwei parallele Riemen von einem gemeinsamen Antriebsmotor angetrieben werden und der Antriebsmotor von der Steuerung des Transportroboters und dessen Energieversorgung angesteuert wird.

Statt eines Riemenförderers können selbstverständlich auch andere Querförderer verwendet werden, wie z. B. Kettenförderer, Schubförderer, die z. B. mit Schubarmen (pneumatisch oder hydraulisch betätigt) arbeiten. Ebenso können Parallelgreifer verwendet werden und sämtliche anderen Förderer, die geeignet sind, von der Oberfläche des Transportroboters auf eine benachbarte Arbeitsebene zu fördern.

Wichtig ist, dass der Querförderer mit dem Transportroboter verbunden ist, so dass der Transportroboter unterschiedliche Aufgaben erfüllen kann. Der eine Transportroboter führt z. B. Übergabearbeiten an der Abgabestation zur Übergabe von Werkstückträgerpaletten auf die Arbeitsebene aus, während ein anderer Transportroboter bereits schon mit seinem Querförderer bearbeitete Stücke von der Aufnahmestation der Arbeitsebene diese Stücke aufnimmt und wiederum auf den Längsförderer der Schienenbahn verbringt.

Weil es sich nicht um ein Weichensystem im eigentlichen Sinne handelt, sondern die Transportroboter mit Querförderern das Weichensystem ersetzen, besteht der weitere Vorteil, dass es sich um ein vollkommen flexibles System handelt. Die bisher bekannten Weichensysteme müssen nämlich genau auf die auszuschleusenden Artikel ausgerichtet werden und müssen genau diesen Artikeln angepasst werden. Hierauf ist die Erfindung nicht begrenzt. Die Erfindung kann mit dem Querförderer beliebige Werkstückträgerplatten oder Transportkisten oder andere Behältnisse von der Schienenbahn auf die Arbeitsebene fördern, ohne dass es einer Anpassung an die zu fördernden Gegenstände bedarf.

Ebenso ergibt sich ein flexibler Einsatzbereich für die verwendeten Transportroboter dergestalt, dass die auf den Transportrobotern angeordneten Querförderer auch andere Transportaufgaben übernehmen können, die nicht unbedingt mit der Beförderung von Werkstückträgerplatten oder Transportkisten auf einer Arbeitsebene zu tun haben.

Der Querförderer kann deshalb z. B. Förderaufgaben mit Transportkisten und an einer anderen Abgabe- und Aufnahmestation Förderaufgaben mit einer Werkstückträgerplatte mit darauf befestigten Werkstücken ausführen. Es handelt sich deshalb um ein vollkommen flexibles System.

Im Folgenden wird die Erfindung anhand von mehrere Ausführungswege darstellenden Zeichnungen näher erläutert.

Es zeigen:
- Figur 1:: schematisiert eine Draufsicht auf eine erste Ausführungsform des Verfahrens nach der Erfindung
- Figur 2:: die Seitenansicht der Anordnung nach Figur 1
- Figur 3:: eine zweite Ausführungsform des Verfahrens mit der Verwendung von Transportkisten
- Figur 4:: die perspektivische Ansicht der Figur 3 mit Darstellung weiterer Einzelheiten
- Figur 5:: die Seitenansicht der Anordnung nach Figur 4

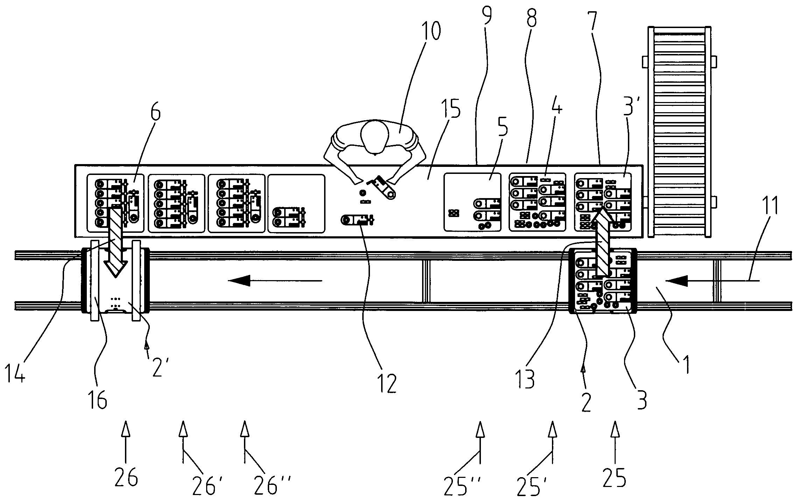

In Figuren 1 bis 5 ist allgemein eine Schienenbahn 1 dargestellt, die aus Ständern besteht, auf deren Oberseiten Profilschienen angeordnet sind, die parallel und im gegenseitigen Abstand die Schienenbahn für den darauf selbsttätig verfahrbaren Transportroboter 2 bilden.

Der Transportroboter greift auf die Profilschiene mit Hilfe zugeordneter profilierter Antriebsrollen ein und es sind noch Führungsrollen vorhanden, die den Transportroboter 2 vor einem unerwünschten Abheben von der Schienenbahn 1 sichern.

Er hat ein eigenes Antriebssystem mit einer eigenen Stromversorgung und eine eigene autonome Intelligenz, mit der er nur zu Beginn seines Arbeitsvorganges entsprechende Fahrbefehle und Arbeitsaufträge von einem Zentralrechner erhält. Diese Arbeitsaufträge werden jedoch vollkommen autonom ohne Rückkopplung mit dem Zentralrechner ausgeführt. Die entsprechenden Signale und Bearbeitungsschritte holt er sich von den verschiedenen, dem Transportroboter gegenüberliegenden Sensoren, die beispielsweise auf einer Arbeitsebene 15 angeordnet sind.

Im gezeigten Ausführungsbeispiel verfährt der Transportroboter 2 in Pfeilrichtung 11 auf der Schienenbahn 1 zu einer Abgabestation 25.

Er ist an seiner Oberseite mit einem Querförderer 16 ausgestattet, auf dem ein oder mehrere Werkstückträgerplatten 3 angeordnet sind. Auf den Werkstückträgerplatten 3 sind zu bearbeitende Werkstücke 12 angeordnet.

Sobald der Transportroboter 2 die Abgabestation 25 auf der Schienenbahn 1 erreicht hat, wird der Querförderer 16 in Betrieb gesetzt und fördert die gesamte Werkstückträgerplatte 3 in Pfeilrichtung 13 auf die Arbeitsebene 15. Dort wird somit ein Abgabeplatz 7 auf der Arbeitsebene 15 gefüllt.

Die Arbeitsebene 15 kann hierbei als Längsförderer ausgebildet sein, als Rollenbahn oder als einfache Arbeitsfläche.

Auf der Arbeitsfläche sind deshalb schon mehrere Werkstückträgerplatten 3', 4, 5 abgesetzt, die auf eine Bearbeitung durch den Werker 10 warten.

Der Werker 10 wird deshalb von dem Abgabeplatz 9 die ihm nächst liegende Werkstückträgerplatte 5 ergreifen und die dort befindlichen Werkstücke 12 in bestimmter Weise bearbeiten.

Nach erfolgter Bearbeitung legt er die Werkstücke 12 wieder auf eine Werkstückträgerplatte auf, wobei in Figur 1 dargestellt ist, dass diese höhenweise hintereinander angeordnet sind und die Werkstückträgerplatte 6 wird dann an der Aufnahmestation 26 wieder mit dem Querförderer in Pfeilrichtung 14 auf die Oberseite des Transportroboters 2' geholt und in Pfeilrichtung 11 abgefahren.

Wichtig ist nun, dass bei der Darstellung in Figur 1 unterschiedliche Abgabestationen 25, 25', 25" definiert sind.

Sollte nämlich der Transportroboter 2 erkennen, dass statt des Abgabeplatzes 7 nun der Abgabeplatz 8 frei ist, dann wird er die Abgabestation 25' anfahren und an dieser Stelle die Werkstückträgerplatte 3 auf den Abgabeplatz 8 schieben.

Erkennt er hingegen, dass gerade der Abgabeplatz 9 freigeworden ist, die anderen Abgabeplätze 7, 8 noch belegt sind, dann kann er zu der

Übergabestation 25" fahren und an dieser Stelle die Werkstückträgerplatte 3 zu dem Abgabeplatz 9 verschieben.

Gleiches gilt im Übrigen für den Abgabeplatz 8.

In analoger Weise geschieht dies auch bei der Aufnahmestation 26. Sollte der Transportroboter erkennen, dass die Aufnahmestation 26 nicht zugänglich ist oder aus irgendwelchen Gründen nicht verwendbar ist, wird er die Aufnahmestation 26' oder 26" anfahren und von dort die entsprechende Werkstückträgerplatte 6 aufnehmen.

Hieraus ergibt sich, dass sowohl die Abgabestation 25 als auch die Aufnahmestation 26 längs des Längsförderers (Schienenbahn 1) flexibel angelegt sind und deshalb eine flexible Abgabe in Form der Abgabe- und Aufnahmeplätze auf der Arbeitsebene 15 stattfindet.

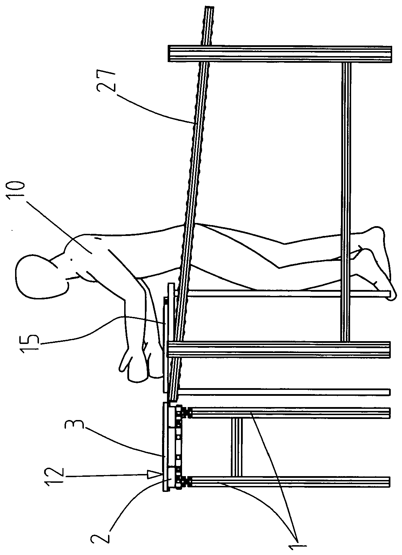

Die Figur 2 zeigt die Seitenansicht der Anordnung nach Figur 1, wo erkennbar ist, dass der Werker 10 beispielsweise für die Bearbeitung der Werkstücke 12 notwendige Zusatzteile von einem zusätzlichen Förderer 27 erhält.

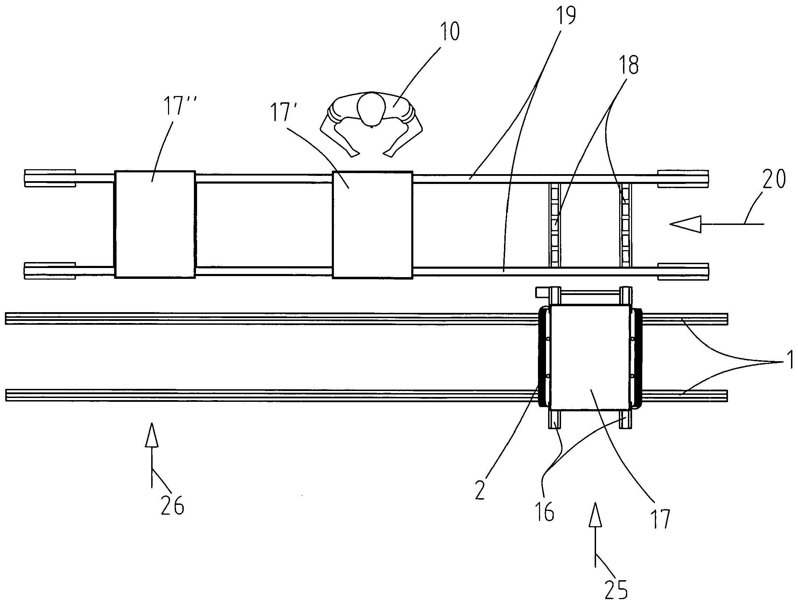

Die Figuren 3 bis 5 zeigen eine ähnliche Ausbildung, wo jedoch die Werkstückträgerplatten 3 durch entsprechende Transportkisten 17 ersetzt sind.

Auch hier verfährt der Transportroboter 2 in Pfeilrichtung 11 zu der entsprechenden Abgabestation 25 und die Transportkiste 17 wird über den beschriebenen Querförderer 16 auf einen parallel zur Schienenbahn 1 angeordneten Längsförderer 19 gebracht, wobei hierfür eine Rollenbahn 18 verwendet werden kann. Die auf dem Längsförderer 19 befindlichen Transportkisten werden somit in Pfeilrichtung 20 weitertransportiert und beispielsweise auch der Bearbeitung durch einen Werker 10 zugeführt.

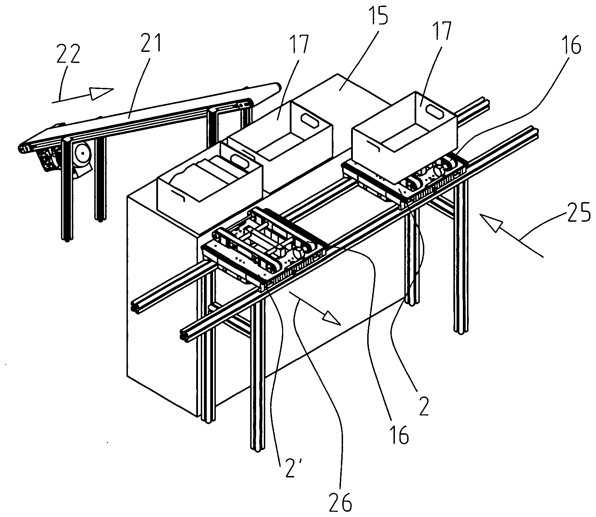

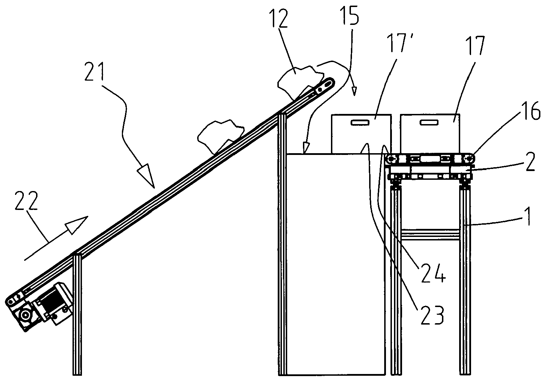

An der Aufnahmestation 26 werden die mit den entsprechenden Gegenständen befüllten Transportkisten 17' wieder von dem Transportroboter 2' aufgenommen. Die Figur 4 zeigt eine perspektivische Ansicht, wo erkennbar ist, dass der Längsförderer 19 durch eine einfache Arbeitsebene 15 ersetzt ist und dass auf dieser Arbeitsebene eine Reihe von Transportkisten 17 angeordnet sind, wobei stets eine Transportkiste 17 von einem Zuführer 21 mit Werkstücken befüllt wird, die in Pfeilrichtung 22 herangeführt werden.
Dies ist in Figur 5 näher dargestellt, und die dort gezeigten Werkstücke 12 werden in eine der Transportkisten 17 eingefüllt.

Wichtig ist, dass der Querförderer sowohl im Ausführungsbeispiel nach den Figuren 1 und 2 als auch beim Ausführungsbeispiel nach den Figuren 3 bis 5 so ausgebildet ist, dass er stets die aufzunehmende Werkstückträgerplatte 3 oder die Transportkiste 17 auch wieder aufnehmen kann.

Zu diesem Zweck ist gemäß Figur 5 vorgesehen, dass die Werkstückträgerplatten 3 oder die Transportkisten 17, 17' um einen Überstand 24 mit ihrem Kistenboden 23 oder dem Boden der Werkstückträgerplatte 3 über die Arbeitsebene 15 in Richtung auf die Schienenbahn 1 vorstehen, so dass der mit dem Transportroboter 2 verbundene Querförderer mit seinem vorderen Aufnahmeende unter den Kistenboden 23 fährt oder die Unterseite der Werkstückträgerplatte 3 und die genannten Teile 3, 17 aufnimmt und in die Transportstellung gemäß Figur 5 befördert.

Es wurde eingangs schon darauf hingewiesen, dass statt eines Querförderers, der mit seinem Aufnahme- oder Abgabeende unter die Werkstückträgerplatte oder den Kistenboden verfährt, auch andere Querförderer verwendet werden können, die im allgemeinen Beschreibungsteil erwähnt wurden. Eine solche Technik des Unterfahrens eines Überstandes des aufzunehmenden Gegenstandes ist dann nicht erforderlich.

### Zeichnungslegende

- 1: Schienenbahn
- 2: Transportroboter 2'
- 3: Werkstückträgerplatte 3'
- 4: Werkstückträgerplatte 3'
- 5: Werkstückträgerplatte 3'
- 6: Werkstückträgerplatte 3'
- 7: Abgabeplatz
- 8: Abgabeplatz
- 9: Abgabeplatz
- 10: Werker
- 11: Pfeilrichtung
- 12: Werkstück
- 13: Pfeilrichtung
- 14: Pfeilrichtung
- 15: Arbeitsebene
- 16: Querförderer
- 17: Transportkiste 17'
- 18: Rollenbahn
- 19: Längsförderer
- 20: Pfeilrichtung
- 21: Zuführer
- 22: Pfeilrichtung
- 23: Kistenboden
- 24: Überstand
- 25: Abgabestation 25' 25"
- 26: Aufnahmestation 26' 26"
- 27: Förderer

## Patentansprüche

1. Verfahren zum Abgeben und Aufnehmen von Werkstücken (12) auf eine Arbeitsebene (15; 19), an welcher unterschiedliche Abgabestationen (25, 25', 25") und entfernt davon unterschiedliche Aufnahmestationen (26, 26', 26") angeordnet sind, welche Teil einer Schienenbahn (1) sind, auf welcher autonom verfahrbare Transportroboter (2) verfahrbar sind, wobei jeder Transportroboter (2) mit einem Querförderer (16) ausgerüstet ist, auf dem die Werkstücke (2) z. B. auf einer Werkstückträgerplatte (3-6) oder einer Transportkiste (17) gelagert sind, welche der Querförderer (16) an eine der Abgabestationen (25) auf die Arbeitsebene (15; 19) fördert und an eine der Aufnahmestationen (26) von der Arbeitsebene (15; 19) wieder aufnimmt, und
a.) der Querförderer (16) als Riemenband ausgebildet ist, wobei zwei parallele Riemen von einem gemeinsamen Antriebsmotor angetrieben werden und der Antriebsmotor von der Steuerung des Transportroboters (2) und dessen Energieversorgung angesteuert wird,
b.) der autonom verfahrbare Transportroboter (2) einmalig einen Arbeitsauftrag von einem Zentralrechner erhält,
c.) der Transportroboter (2) die entsprechenden Signale und Bearbeitungsschritte ohne Rückkopplung mit dem Zentralrechner von den verschiedenen, dem Transportroboter gegenüberliegenden Sensoren holt, die auf der Arbeitsebene (15) angeordnet sind,
d.) der Transportroboter (2) einen freien Abgabeplatz (7, 8, 9) auf der Arbeitsebene (15, 19) im Bereich der Abgabestation (25, 25', 25") erkennt und die Werkstückträgerplatte (3-6) oder die Transportkiste (17) auf den Abgabeplatz (7, 8, 9) der Arbeitsebene mit dem Querförderer (16) abgibt,
e.) der Transportroboter (2) die Aufnahmestation (26, 26', 26"), die eine fertig bearbeitete Werkstückträgerplatte (3-6) oder eine Transportkiste (17) aufweist, erkennt und anfährt und dort die Werkstückträgerplatte (3-6) oder die Transportkiste (17) aufnimmt.

2. Verfahren nach Anspruch 1, **dadurch gekennzeichnet, dass** die Transportroboter (2) auftragsbezogen verschiedene, nebeneinander liegende Abgabestationen (25) und/oder Aufnahmestation (26) an der Arbeitsebene (15; 19) anfahren.

3. Verfahren nach Anspruch 1 oder 2, **dadurch gekennzeichnet, dass** wenn der Transportroboter erkennt, dass eine Aufnahmestation (26) nicht zugänglich ist, eine andere Aufnahmestation (26') angefahren wird.

4. Verfahren nach einem der Ansprüche 1 bis 3, **dadurch gekennzeichnet, dass** die Arbeitsebene (15, 19) aus verschiedenen Bearbeitungsmaschinen besteht, die in einem starren Takt arbeiten, und die zu bearbeitenden Werkstücke (12) mit deren Werkstückträgerplatte (3-6) oder mit deren Transportkiste (17) bedarfsgesteuert in diesem Takt einschleusen.

5. Verfahren nach einem der Ansprüche 1 bis 4, **dadurch gekennzeichnet, dass** ein erster Transportroboter (2) mit seinem Querförderer (16) Übergabearbeiten an der Abgabestation (25) zur Übergabe von zu bearbeitenden Werkstücken (12) ggfs. mit deren Werkstückträgerplatte (3-6) oder mit deren Transportkiste (17) auf die Arbeitsebene (15, 19) ausführt, während ein zweiter Transportroboter (2') mit seinem Querförderer (16) fertig bearbeitete Werkstücke (12) mit der Werkstückträgerplatte (3-6) oder mit der Transportkiste (17) von der Aufnahmestation (26) der Arbeitsebene (15, 19) aufnimmt und auf den Längsförderer der Schienenbahn (1) verbringt.

6. Verfahren nach einem der Ansprüche 1 bis 5, **dadurch gekennzeichnet, dass** die Riemen des Querförderer (16) mit ihren vorderen Aufnahme- oder Abgabeenden unter den Kistenboden (23) oder die Unterseite der Werkstückträgerplatte (3-6) fahren, die Werkzeugträgerplatte oder Transportkiste (3-6, 17) aufnehmen und in eine Transportstellung des Transportroboters befördern.

## Claims

1. Method for delivering and receiving workpieces (12) at a working plane (15; 19), on which are arranged different delivery stations (25, 25', 25") and remote therefrom different receiving stations (26, 26', 26"), which are part of a rail track (1) on which autonomously movable transport robots (2) can be moved, wherein each transport robot (2) is equipped with a transverse conveyer (16) on which the workpieces (2) are supported, for example on a workpiece carrier plate (3-6) or a transport box (17), which the transverse conveyer (16) at one of the delivery stations (25) conveys to the working plane (15; 19) and at one of the receiving stations (26) receives again from the working plane (15; 19), and
a.) the transverse conveyer (16) is designed as a belt fastener, wherein two parallel belts are driven by a common drive motor and the drive motor is triggered by the control of the transport robot (2) and its energy supply,
b.) the autonomously movable transport robot (2) receives a single work request from a central computer,
c.) the transport robot (2) picks up the corresponding signals and processing steps without feedback with the central computer from the various sensors opposite the transport robot and which are arranged on the working plane (15),
d.) the transport robot (2) detects a free delivery space (7, 8, 9) on the working plane (15, 19) in the region of the delivery station (25, 25', 25") and delivers the workpiece carrier plate (3-6) or the transport box (17) to the delivery space (7, 8, 9) of the working plane using the transverse conveyer (16),
e.) the transport robot (2) detects and starts the receiving station (26, 26', 26"), which has a finally processed workpiece carrier plate (3-6) or a transport box (17), and receives there the workpiece carrier plate (3-6) or the transport box (17).

2. Method according to claim 1, **characterised in that** the transport robots (2), referring to the request, start various delivery stations (25) lying next to one another and/or receiving station (26) at the working plane (15; 19).

3. Method according to claim 1 or 2, **characterised in that** when the transport robot detects that a receiving station (26) is not accessible, another receiving station (26') is started.

4. Method according to one of claims 1 to 3, **characterised in that** the working plane (15, 19) consists of various processing machines which operate in a strict cycle, and the workpieces (12) to be processed lock in with their workpiece carrier plate (3-6) or with their transport box (17), controlled by need, in this cycle.

5. Method according to one of claims 1 to 4, **characterised in that** a first transport robot (2) with its transverse conveyer (16) executes transfer tasks at the delivery station (25) to transfer workpieces (12) to be processed, optionally with their workpiece carrier plate (3-6) or with their transport box (17), to the working plane (15, 19), while a second transport robot (2') with its transverse conveyer (16) receives finally processed workpieces (12) with the workpiece carrier plate (3-6) or with the transport box (17) from the receiving station (26) of the working plane (15, 19) and passes them to the longitudinal conveyer of the rail track (1).

6. Method according to one of claims 1 to 5, **characterised in that** the belts of the transverse conveyer (16) with their front receiving ends or delivery ends move below the box base (23) or the underside of the workpiece carrier plate (3-6), receive the workpiece carrier plate or transport box (3-6, 17) and convey them to a transport position of the transport robot.

## Revendications

1. Procédé pour déposer et prendre des pièces (12) sur un plan de travail (15 ; 19) au niveau duquel sont disposés différents postes de dépose (25, 25', 25") et, à une distance de ceux-ci, différents postes de prélèvement (26, 26', 26") qui font partie d'une voie sur rails (1) sur laquelle des robots de transport à circulation autonome (2) sont aptes à circuler, chaque robot de transport (2) étant équipé un transporteur transversal (16) sur lequel les pièces (12) sont stockées par exemple sur une plaque porte-pièces (3-6) ou une caisse de transport (17) que le transporteur transversal (16) amène jusqu'à l'un des postes de prélèvement (25) pour les déposer sur le plan de travail (15 ; 19), et jusqu'à l'un des postes de prélèvement (26) pour les reprendre sur le plan de travail (15 ; 19), et
a) le transporteur transversal (16) est conçu comme une bande à courroies, deux courroies parallèles étant entraînées par un moteur d'entraînement commun, et le moteur d'entraînement étant commandé par la commande du robot de transport (2) et par l'alimentation en énergie de celui-ci,
b) le robot de transport à circulation autonome (2) recevant une fois d'un ordinateur central un ordre de travail,
c) le robot de transport (2) allant chercher auprès des différents capteurs prévus en face du robot de transport et disposés sur le plan de travail (15), les signaux et étapes de traitement correspondants, sans rétroaction avec l'ordinateur central,
d) le robot de transport (2) détectant un emplacement de dépose (7, 8, 9) libre sur le plan de travail (15, 19) dans la zone du poste de dépose (25, 25', 25"), et déposant la plaque porte-pièces (3-6) ou la caisse de transport (17) sur l'emplacement de dépose (7, 8, 9) du plan de travail avec le transporteur transversal (16),
e) le robot de transport (2) détectant et approchant du poste de prélèvement (26, 26', 26") qui comporte une plaque porte-pièces (3-6) dont le traitement est terminé ou une caisse de transport (17), et prenant à cet endroit la plaque porte-pièces (3-6) ou la caisse de transport (17).

2. Procédé selon la revendication 1, **caractérisé en ce que** les robots de transport (2), en fonction des ordres, approchent de différents postes de dépose (25) et/ou postes de prélèvement (26) situés côte à côte sur le plan de travail (15 ; 19).

3. Procédé selon la revendication 1 ou 2, **caractérisé en ce que** lorsque le robot de transport détecte qu'un poste de prélèvement (26) n'est pas accessible, un autre poste de prélèvement (26') est approché.

4. Procédé selon l'une des revendications 1 à 3, **caractérisé en ce que** le plan de travail (15, 19) se compose de machines de traitement différentes qui fonctionnent suivant un rythme rigide, et les pièces (12) à traiter arrivent avec leur plaque porte-pièces (3-6) ou leur caisse de transport (17) à ce rythme, en étant commandées suivant les besoins.

5. Procédé selon l'une des revendications 1 à 4, **caractérisé en ce qu'**un premier robot de transport (2) effectue avec son transporteur transversal (16) des tâches de transfert sur le poste de dépose (25), pour transférer des pièces (12) à traiter, éventuellement avec leur plaque porte-pièces (3-6) ou leur caisse de transport (17), sur le plan de travail (15, 19), tandis qu'un deuxième robot de transport (2') prend sur le poste de prélèvement (26) du plan de travail (15, 19), avec son transporteur transversal (16), les pièces (12) traitées, avec la plaque porte-pièces (3-6) ou la caisse de transport (17), et les amène sur le transporteur longitudinal de la voie sur rails (1).

6. Procédé selon l'une des revendications 1 à 5, **caractérisé en ce que** les courroies du transporteur transversal (16) passent avec leurs extrémités de prélèvement ou de dépose sous le fond de caisse (23) ou sous le côté inférieur de la plaque porte-pièces (3-6), prennent la plaque porte-pièces (3-6) ou la caisse de transport (3-6, 17) et l'amènent jusqu'à une position de transport du robot de transport.
